# EUROPEAN PATENT APPLICATION

(11) **EP 4 407 353 A1**
(43) Date of publication of application: **31.07.2024**
(21) Application number: 24153793.5
(22) Date of filing: 24.01.2024
(51) Int. Cl.: G01V 1/00, E02D 1/00, G01V 1/143

(54) **SEISMIC SOIL PROBE, SEISMIC SOIL TESTING APPARATUS AND METHOD OF USING THEM**

(30) Priority: 27.01.2023 EP 23153679
(71) Applicant: Ørsted Wind Power A/S, 7000 Fredericia (DK)
(72) Inventor: PARK, Joonsang, Fredericia Skaerbaek (DK); SAUVIN, Guillaume, Fredericia Skaerbaek (DK); SANTOS, Roi Soage, Fredericia Skaerbaek (DK); BURAAS, Bent, Fredericia Skaerbaek (DK); WALTA, Axel, Fredericia Skaerbaek (DK)
(74) Representative: Lewis Silkin LLP

(57) **Abstract**

Seismic soil probe (1) comprising a body for insertion into the soil, a seismic sensor (3) located at a first region of the body, and a seismic generator (2) located at a second region of the body for emitting seismic signals. The seismic generator (2) comprises a hammer (6), a biasing member (7) for biasing the hammer (6) into contact with a surface (21), and an actuator (5) operable to move the hammer (6) against the bias away from the surface (21) to a primed position and to release the hammer (6) from the primed position for impacting the surface (21) to generate a seismic wave signal.

## Description

The present invention concerns a seismic soil probe, a seismic soil testing apparatus incorporating the seismic soil probe, as well as methods of seismic soil testing. The disclosure is particularly relevant to seismic cone penetration testing apparatus and small strain shear modulus determination methods in soil.

Seismic cone penetration testing (SCPT) is used to calculate the small strain shear modulus of soil by measuring the velocity of the seismic shear wave travelling through it. The small strain modulus is an important quantity for determining not only the dynamic response of the soil and rock (such as chalk, mudstones, calcarenite), but also the initial static stiffness for geotechnical engineering design. For example, it can help in the determination of soil liquefaction potential and help to model the behaviour of offshore structures due to wave loading and vibrations.

Such SCPT devices typically comprise a seismic sensor, such as a geophone or accelerometer, installed in or added as a module onto a cone penetrometer. The cone penetrometer is driven into the ground to certain predetermined depth intervals. At each depth interval, a seismic pulse generator, typically comprising an anvil and hammer, is used to generate a seismic event at the surface near the insertion point. This causes a seismic pulse wave to propagate through the soil until this pulse wave is detected by the seismic sensor in the cone penetrometer deeper down.

A disadvantage with known SCPT devices is that testing operations can be time consuming, especially in offshore applications. For example, not only does a seismic source need to be installed and operated on the seabed, but the cone penetrometer also needs to be driven into the soil intermittently to different depths. This repeated cycle of testing and driving means that the overall time required to complete a testing sequence is relatively lengthy, which in turn means that such testing is relatively expensive. Furthermore, because of the installation on the seabed, such arrangements often suffer from coupling issues, leading to poor signal transmission into the soil.

In addition, the accuracy of detection of the shear and/or compression waves also reduces as depths increase because the strength of the pulse wave signal is dampened as it passes through layers of soil. At the same time, the longer is the travel path of the shock wave the more uncertain is the actual trajectory that the wave have followed.

In view of the above, there has been interest in SCPT devices which are able to perform continuous sensing and in which the source is integrated into the cone penetrometer. In principle, such a device should allow more rapid testing at greater depths since it may be driven continuously, and measurements are localised around the probe meaning they avoid the need for long seismic wave travel distances. However, there are a number of challenges to implement such an improved SCPT design. Most notably, since the rod forming the cone penetrometer is narrow, with the space available to house a seismic generator, it is difficult to generate a sufficient seismic pulse wave. For instance, it has been suggested to use a solenoid driven hammer to generate the impact, but such hammers are limited to relatively weak pulse waves, which means they may not be suitable in certain soil types. Equally, electromagnetic driven hammers are more difficult to control, which creates challenges in interpreting the signal data.

In view of the above, there is a need for an improved seismic probe device and associated testing methodologies.

According to a first aspect of the present invention, there is provided a seismic soil probe comprising: a body for insertion into the soil, a seismic sensor located at a first region of the body; and a seismic generator located at a second region of the body for emitting seismic signals, wherein the seismic generator comprises a hammer, a biasing member for biasing the hammer into contact with a surface, and an actuator operable to move the hammer against the bias away from the surface to a primed position and to release the hammer from the primed position for impacting the surface to generate a seismic wave signal.

In this way, a seismic soil probe, such as a cone penetrometer, may be provided for use in SCPT testing in which both the seismic sensor and source are integrated in the same probe. This thereby avoids the need to locate a separate seismic wave generator on the soil surface. At the same time, it facilitates continuous SCPT sensing. Moreover, with this arrangement, the seismic wave signal is generated by mechanical means. That is, by storing potential energy in the primed hammer, and then releasing the hammer, the impact surface may be impacted with a consistent force for generating a repeatable seismic wave signal. As such, a relatively high impact force, for instance above 500N, may be generated within a compact arrangement.

In embodiments, the body comprises a tubular housing. In this way, the probe may be provided as a hollow body which houses the sensor and generator in its interior. Therefore, a narrow elongate construction may be provided, which in turn allows the probe to be more easily driven through the soil.

In embodiments, the biasing member is a mechanical biasing member. As such, elastic strain in the biasing member may be used to store potential energy for generating the impact force to trigger the seismic pulse wave.

In embodiments, the biasing member comprises a spring mounted within the tubular housing. In this way, a compact arrangement may be provided in which the biasing member is located within the body of the probe.

In embodiments, the longitudinal axis of the biasing member is substantially perpendicular to a movement direction of the hammer when impacting the surface. In this way, a lateral impact wave may be created which is emitted outward from the lateral surface of the body, through the soil in contact therewith.

In embodiments, the spring comprises a rod arranged longitudinally within the tubular housing. In this way, a longer biasing member may be accommodated within the interior of the tube, thereby allowing for a higher force to be applied through the hammer for generating a larger impact force. This may therefore allow for stronger seismic wave signal to be generated within a compact probe.

In embodiments, the rod stores elastic strain energy when moved by the actuator to the primed position. As such, the biasing member acts to store potential energy which is then converted to an impact force.

In embodiments, the surface is an interior surface of the body. In this way, the hammer may apply an impact to the interior of the body, which may thereby be conducted through the body to the exterior surfaces which interface with the soil.

In embodiments, the actuator comprises a cam rotatably operable to move the hammer. In this way, the hammer may be moved into the primed position and then released by rotation of the cam. As such, a cyclic setting and triggering sequence may be established by the cam profile.

In embodiments, the cam comprises a spiral profile region for moving the hammer away from the surface to a primed position. In this way, the hammer may be progressively moved to the primed position as the cam profile spirals radially inward.

In embodiments, the cam comprises a release position for releasing the hammer from the primed position. In this way, the cam profile may move the hammer to its primed position and then drop away to release the stored potential energy and effect the impact.

In embodiments, the hammer comprises a follower formation for following the cam's profile. In this way, the movement of the hammer may be effected directly by its engagement with the cam.

In embodiments, the actuator comprises a stepper motor for driving the cam. In this way, a low cost, high torque motor may be provided for driving hammer to move against the bias of the biasing member.

In embodiments, a damper is provided mounted to one of the hammer and the surface for damping vibrations generated when the hammer impacts the surface. In this way, the characteristic frequency of the signal generated by the hammer may be lowered, with higher frequencies being attenuated. As such, the presence of undesired resonance noise may be reduced, which might otherwise reduce the discernability of the lower frequency vibrational signals transmitted through the soil.

In embodiments, the seismic soil probe further comprises one or more damper elements between sections of the body for damping vibrations transmitted therethrough. In this way, signals transmitted through the body of the probe may be attenuated.

In embodiments, the body comprises a detachable coupling operable for detaching the first region of the body from the second region for separating the seismic sensor from the seismic generator. In this way, the body may be inserted into the soil as a single piece, but the sections may then be separated prior to testing to vibrationally isolate the seismic sensor from the seismic generator.

According to a second aspect, there is provided a seismic soil testing apparatus comprising: a seismic soil probe according to the above; and a controller for controlling the actuator to move the hammer to the primed position and then to release it for impacting the surface to generate a seismic wave signal and for receiving input signals received by the seismic sensor. In this way, a soil testing apparatus may be provided in which the seismic sensor and generator may be integrated into the same probe.

In embodiments, the controller comprises a signal filter for filtering seismic signals from the input signals. As such, for example, pressure wave signals conducted through the probe itself may be filtered out. For example, in embodiments, the signal filter may comprise a low pass filter for filtering out higher frequencies associated with direct conduction through the body.

According to a third aspect, there is provided a method of seismic soil testing using the seismic soil testing apparatus according to the above, the method comprising the steps of: inserting the seismic soil probe into soil; generating a pattern of seismic wave signals by controlling the actuator to repeatedly move and release the hammer to impact the surface; and detecting the seismic wave signals as the seismic soil probe is moved through different depths of soil. In this way, a continuous SCPT sensing methodology may be implemented whereby seismic signals may be generated continually as the probe is driven deeper into the soil, and the transmission of the seismic response may be monitored to rapidly characterise soil properties through the soil layers. It will also be understood that the soil probe may be used in static interment testing methodology as well.

Illustrative embodiments of the present invention will now be described with reference to the accompanying drawings in which:
Figure 1 shows a schematic illustration of a seismic soil testing apparatus according to an illustrative embodiment of the invention;
Figure 2 shows a cross sectional isometric view of the seismic generator region of the seismic probe;
Figure 3 shows an isometric view of the actuator of the seismic generator;
Figure 4 shows a cross sectional isometric view of the actuator of the seismic generator;
Figure 5 shows a cross sectional isometric view of the seismic generator region of a seismic probe according to a second illustrative embodiment;
Figure 6 shows a schematic illustration of a seismic soil testing apparatus according to a third illustrative embodiment; and
Figure 7 shows a schematic illustration of a seismic soil testing apparatus according to a fourth illustrative embodiment.

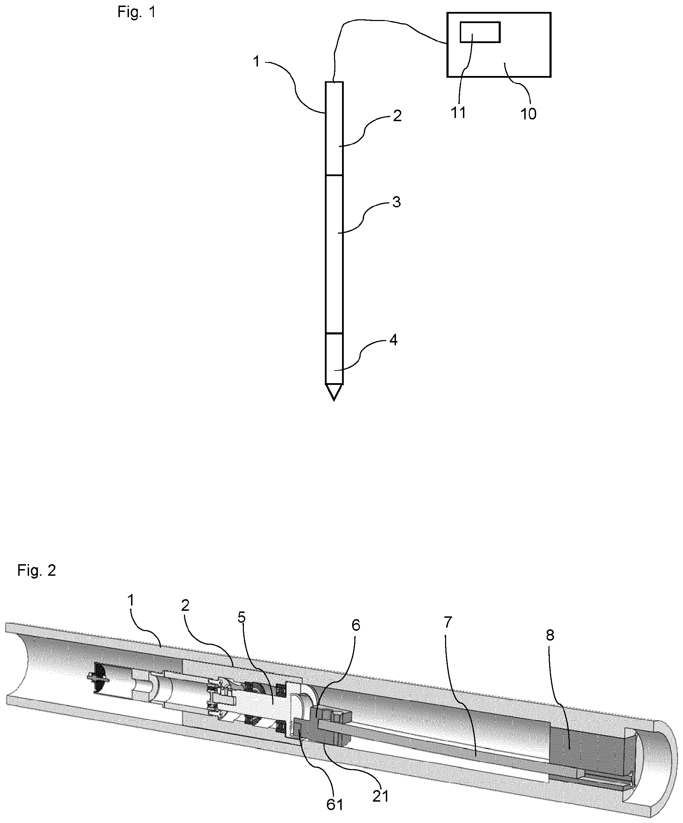

Figure 1 shows a schematic illustration of a seismic soil testing apparatus according to an illustrative embodiment of the invention. The apparatus comprises a seismic soil probe 1 and a controller 10 for controlling and recording sensor readings from the probe 1. In this example, the controller 10 is connected to the probe 1 via a control cable inside the rod containing power and data interfaces. In other embodiments, other communication approaches may be adopted. For example, control may be implemented remotely on a remote server, or a controller may also be integrated in the probe itself.

The seismic soil probe 1 is formed as a hollow tubular body, with a pointed tip for penetration through the soil. In other embodiments, a prove with a rounded or flat tip may be used. The probe 1 has a modular design and can be driven down into the soil by attaching tube segments or push rods to its upper end. In this embodiment, the probe is formed of a 44mm diameter modular tube, thereby allowing standardised tube segments (such as 36mm or 44mm segments) to be added to the string assembly. The tubular sections may be used to route control and power cabling down to the end of the probe. In other embodiments, batteries may be integrated into the probe for providing power and supporting data transmission operations. Data transmission may also be implemented using acoustics or light, for example. The main body of the probe 1 houses a CPT cone section 4 forming the tip, a seismic receiver module 3, and a seismic generator 2 at the upper part.

The seismic receiver module 3 comprises a sensor for detecting seismic wave signals and, in this embodiment, the sensor comprises a plurality of mems accelerometers spaced a 25cm intervals and attached to the interior surface of the body, aligned in the same polarity as the hammer hitting impact (as is described below). In other embodiments, other spacing intervals and seismic wave sensor types, such as geophones, may be used. Vibrations applied to the probe via the soil may thereby be detected and fed back to the controller 10 for processing. In this embodiment, the controller 10 includes a filter 11 for filtering received sensor readings and isolating those relevant to subsequent analysis. In particular, the filter 11 in this embodiment functions as a low pass filter for isolating lower frequency seismic signals transmitted through the soil from higher frequency signals transmitted directly through the body 1. In embodiments, filtering may not be needed or the seismic generator may be designed to emit seismic waves at frequencies that minimise the amount of filtering needed. Alternatively, filtering may also be implemented as part of the post-processing of data.

Figure 2 shows a cross sectional isometric view of the interior of the seismic generator region of the seismic probe 1 housing the seismic generator 2, which provides a seismic source. The seismic generator 2 comprises a hammer 6 which is mounted to a rod 7, which is fixed at its distal end by a clamp 8. The rod 7 functions as a cantilever or pivot spring that is elastically deformable such that the hammer 6 may be moved away from the interior surface 21 of the body 2 against the elastic strain of the rod 7. As such, the rod 7 acts as a biasing member for biasing the hammer 6 into contact with the surface 21, thereby impacting the shell of the body. An actuator 5 is provided in the form of a rotating trigger wheel for first moving the hammer 6 against the bias away from the surface 21 to a primed or loaded position, and then releasing it. The hammer 6 is provided with a projection formation that forms a follower 61 that engages with actuator 5 to effect movement. In other embodiments, the follower 61 includes a roller wheel for bearing on the cam profile.

The hammer 6 is formed of a material and is configured such that when it impacts the surface of the body the signal produced has a selected frequency content such that the shock wave propagates through the soil. It will be understood that this frequency may vary depending on the specific application. Furthermore, the hammer design may be configured for generating signal frequencies which minimise or avoid the need to filter the received signals.

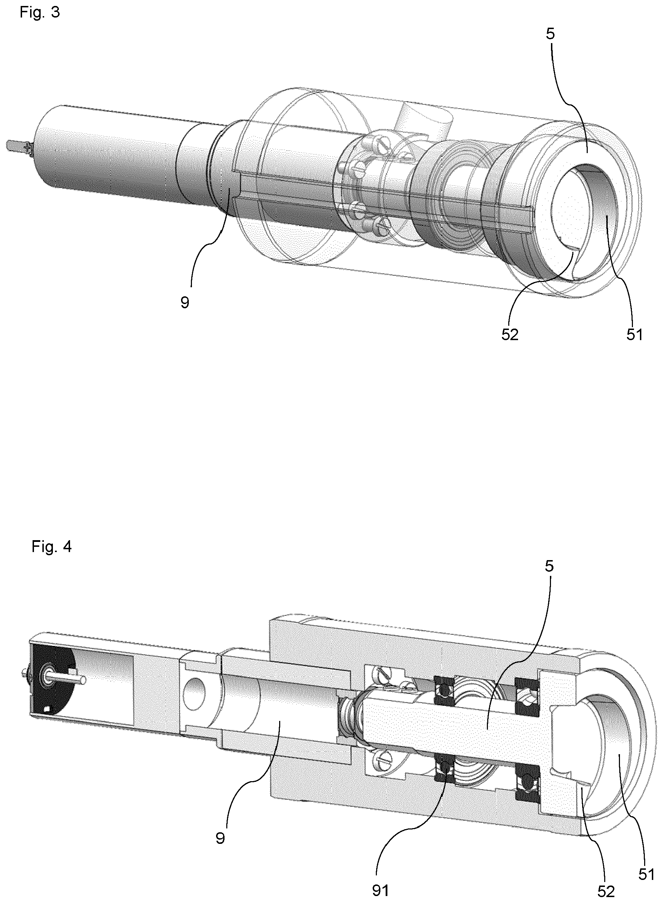

In this connection, Figures 3 and 4 show isometric and cross-sectional views of the actuator 5. The actuator 5 comprises a cam 51 on its proximal face which engages with the follower 61. The cam 51 is formed with a spiral profile which tapers radially inward until release point 52, which forms a notch at which stage the cam profile drops away for releasing the follower 61.

The cam 51 is rotatably supported by bearings 91 and driven by a stepper motor 9. The electrical and mechanical parts of the stepper motor 9 are not shown in Figure 4. When the stepper motor 9 drives the cam 51, its cam profile is rotated clockwise to force the hammer 6, via its engagement through follower 61, away from the interior surface 21 of the body 1. This acts against the bias provided by rod 7, thereby loading potential energy in the form of elastic strain as the rod 7 is bent radially inward. The cam 51 rotates up to the release point 52 to prime the hammer 6, and as the follower 61 passes the release point 52, the spring-loaded hammer 6 is released, for driving it into the interior surface 21 for creating an impact force. This thereby generates a seismic wave signal which is transmitted through the soil. The rod 7 is configured such that the hammer 6 is still loaded when engaged with the surface 21 to mitigate bouncing when the impacting the shell of the body.

In use, the seismic soil probe 1 is inserted into soil. The probe 1 is connected to a string of push rods to drive the probe 1 downward, with the number of pushrods being used determining the investigation depth. For instance, if investigations are to be conducted down to 40m, around 43m of rods will be used, with the additional 3m length being used to maintain contact with the push-in machine, such as a seabed CPT rig. As the probe 1 is moved, the cam 51 is driven constantly by stepper motor 9. As such, the hammer 6 is repeatedly loaded and released to generate a repeating pattern of seismic signals. For example, the cam 51 may be driven at 10 seconds per revolution, to provide a 10 second trigger interval. Rotatory position sensors (not shown) may be used to provide feedback on the position of the cam 51 for controlling the trigger rate and synchronising seismic sensor recordings.

The sensor, being part of the receiver module 3 detects the seismic wave signals as the seismic soil probe is inserted deeper into soil. This thereby allows for continuous SCPT sensing for rapidly characterising soil properties as the probe moves through the soil. It will also be understood that seismic measurements may be taken as the probe is withdrawn from the soil or while the probe's movement through the soil has been paused.

It will be understood that other embodiments may incorporate additional features to improve the performance of the probe. For example, in the embodiment shown in Figure 1, a low pass filter is used for isolating lower frequency seismic signals transmitted through the soil from higher frequency signals transmitted directly through the body 1. However, other embodiments may instead or additionally include features which minimise or prevent the generation or propagation of vibrations through the body of the probe. These features may, for example, minimise the amount of filtering needed or avoid the need for filtering altogether. As such, the presence of undesired resonance noise may be reduced, which might otherwise reduce the discernability of the vibrational signals transmitted through the soil.

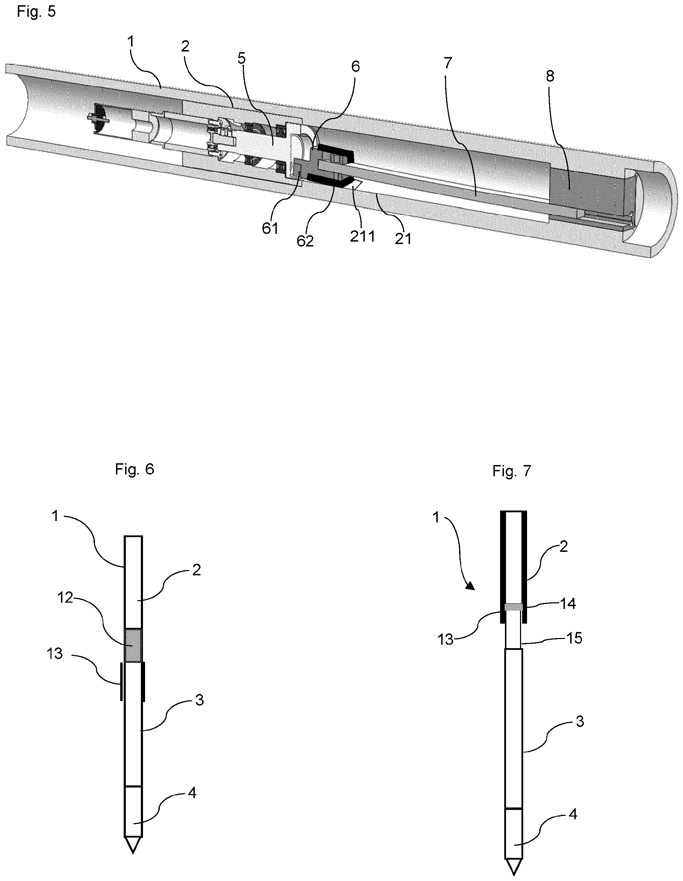

In this connection, in a second illustrative example shown in Figure 5, the hammer 6 is provided with a damper 62 which is formed as a cover around the laterally facing surface of the hammer 6. This acts to lower the characteristic frequency of the signal generated by the hammer 6. As such, when the hammer 6 is released and impacts against the impact region 211 of the interior surface 21, the vibrations are transmitted through the damper material, with this material being selected to attenuate undesired frequencies. For example, natural or synthetic rubbers or other low-density materials may be used, with such materials providing a high damping coefficient. Lower frequency signals have larger wavelengths and hence do not travel through the small volume of material making up the body of the probe 1. As such, most of the signal propagates through the soil.

In other arrangements, the damper 62 may be provided in the form of a pad mounted to the impacting face of the hammer 6, namely the face which impacts the impact region 211 of the interior surface 21.

In other alternative embodiments, the damper 62 may instead be provided fixed onto the impact region 211 of the surface 21 such that the hammer 6 impacts the damper 62. As with the above example, when the hammer 6 is released, the impact is thereby transmitted through the damper material before transmission through the body 1, with the damper material acting to attenuate undesired vibrations. This thereby forms a floating window, through which the impact forces are delivered. In effect, this provides a physical filter for mitigating the propagation of undesired vibrations through the body of the probe 1.

A third embodiment is shown in Figure 6. In this case, a damping connector 12 is provided between the seismic receiver module 3 and the seismic generator 2. As the hammer 6 within the seismic generator 2 impacts the interior surface 21 to generate vibrations, the undesired vibrations are attenuated as they pass through the damping connector 12, thereby reducing the magnitude or preventing the transmission of these vibration to the seismic receiver module 3. This thereby acts to isolate the seismic signals transmitted through the soil from undesired vibrations transmitted directly through the body 1. In this example, an activatable locking means 13 may be additionally provided on the body 1 which is movable between a locked state where the means is slid over the damping connector 12 to rigidly couple the seismic receiver module 3 and seismic generator 2 together, and an unlocked state (as shown in Figure 6) where the seismic generator 2 can move relative to the seismic receiver module 3, albeit that his movement is restrained through the damping connector. This thereby provides stiffness during insertion of the probe 1, with the locking means 13 being unlocked during testing, for example as the probe 1 is withdrawn.

Damping elements formed of damping material may also be provided at connections between sections of the probe 1 or inside its body. These elements may thereby act to damp undesired vibrations being transmitted through the probe 1.

A fourth embodiment is shown in Figure 7. In this case, the probe 1 is separable into two parts connected by a flexible connector 15 under the control of locking means 13. In particular, a detachable coupling 14 is provided between the seismic receiver module 3 and the seismic generator 2. Once the probe 1 has been inserted to the desired depth, the locking means 13 may be actuated to release the seismic receiver module 3. The probe 1 may then be retracted upwards, with the tensile forces causing the upper seismic generator section 2 to pull away from the seismic receiver module 3. This acts to vibrationally isolate the seismic generator 2 from the seismic receiver module 3, thereby preventing undesired vibrations generated during hammer impacts from being transmitted to the seismic receiver module 3 through the probe's body. As such, only seismic signals are transmitted through the soil. Testing may be implemented as the probe 1 is withdrawn from the soil, with the seismic generator section 2 being retracted upwards and the flexible connector 15 acting to draw the seismic receiver module 3 up behind it. The flexible connector 15 may, for instance, be a linkage of low density material or rubber, or flexible cabling.

It will be understood that the embodiments illustrated above show applications of the invention only for the purposes of illustration. In practice the invention may be applied to many different configurations, the detailed embodiments being straightforward for those skilled in the art to implement.

## Claims

1. A seismic soil probe comprising:
a body for insertion into the soil,
a seismic sensor located at a first region of the body; and
a seismic generator located at a second region of the body for emitting seismic signals, wherein the seismic generator comprises a hammer, a biasing member for biasing the hammer into contact with a surface, and an actuator operable to move the hammer against the bias away from the surface to a primed position and to release the hammer from the primed position for impacting the surface to generate a seismic wave signal.

2. A seismic soil probe according to claim 1, wherein the body comprises a tubular housing.

3. A seismic soil probe according to claim 2, wherein the biasing member is a mechanical biasing member.

4. A seismic soil probe according to claim 2 or 3, wherein the biasing member comprises a spring mounted within the tubular housing.

5. A seismic soil probe according to any preceding claim, wherein the longitudinal axis of the biasing member is substantially perpendicular to a movement direction of the hammer when impacting the surface.

6. A seismic soil probe according to any preceding claim, wherein the spring comprises a rod arranged longitudinally within the tubular housing.

7. A seismic soil probe according to claim 6, wherein the rod stores elastic strain energy when moved by the actuator to the primed position.

8. A seismic soil probe according to any preceding claim, wherein the surface is an interior surface of the body.

9. A seismic soil probe according to any preceding claim, wherein the actuator comprises a cam rotatably operable to move the hammer.

10. A seismic soil probe according to claim 9, wherein the cam comprises a spiral profile region for moving the hammer away from the surface to a primed position.

11. A seismic soil probe according to claim 10, wherein the cam comprises a release position for releasing the hammer from the primed position.

12. A seismic soil probe according to any one of claims 9 to 11, wherein the hammer comprises a follower formation for following the cam's profile.

13. A seismic soil probe according to any preceding claim, further comprising a damper mounted to one of the hammer and the surface for damping vibrations generated when the hammer impacts the surface.

14. A seismic soil probe according to any preceding claim, further comprising one or more damper elements between sections of the body for damping vibrations transmitted therethrough.

15. A seismic soil probe according to any preceding claim, wherein the body comprises a detachable coupling operable for detaching the first region of the body from the second region for separating the seismic sensor from the seismic generator.

16. A seismic soil testing apparatus comprising:
a seismic soil probe according to any of claims 1-15; and
a controller for controlling the actuator to move the hammer to the primed position and then to release it for impacting the surface to generate a seismic wave signal and for receiving input signals received by the seismic sensor.

17. A method of seismic soil testing using the seismic soil testing apparatus of claim 16, the method comprising the steps of:
inserting the seismic soil probe into soil;
generating seismic wave signals by controlling the actuator to repeatedly move and release the hammer to impact the surface; and
detecting the seismic wave signals as the seismic soil probe is moved through different depths of soil.
